(19)

Europäisches
Patentamt
European
Patent Office
Office européen
des brevets

(11)     **EP 2 899 706 B1**

(12)                          **EUROPEAN PATENT SPECIFICATION**

(45) Date of publication and mention
of the grant of the patent:
**07.12.2016  Bulletin 2016/49**

(51) Int Cl.:
**G08B 13/196** (2006.01)        **G06K 9/00** (2006.01)
**G06T 7/20** (2006.01)

(21) Application number: **14160409.0**

(22) Date of filing: **18.03.2014**

(54) **Method and system for analyzing human behavior in an intelligent surveillance system**

Verfahren und System zur Analyse des menschlichen Verhaltens in einem intelligenten
Überwachungssystem

Procédé et système permettant d'analyser le comportement humain dans un système de surveillance
intelligent

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2014  PL 40697114**

(43) Date of publication of application:
**29.07.2015  Bulletin 2015/31**

(73) Proprietor: **Politechnika Poznanska
60-965 Poznan (PL)**

(72) Inventors:
• **Mackowiak, Slawomir
61-295 Poznan (PL)**
• **Kaminski, Lukasz
75-685 Koszalin (PL)**
• **Kowalak, Krzysztof
61-312 Poznan (PL)**
• **Gardzinski, Pawel
09-400 Plock (PL)**

• **Januszkiewicz, Lukasz
64-915 Jastrowie (PL)**

(74) Representative: **Eupatent.pl
ul. Zeligowskiego 3/5
90-752 Lodz (PL)**

(56) References cited:
**US-A1- 2010 027 835      US-A1- 2010 215 257
US-A1- 2010 303 303      US-A1- 2010 322 474
US-A1- 2011 054 870      US-A1- 2011 205 359**

• **ZHANFENG YUE ET AL: "Synthesis of
Silhouettes and Visual Hull Reconstruction for
Articulated Humans", IEEE TRANSACTIONS ON
MULTIMEDIA, IEEE SERVICE CENTER,
PISCATAWAY, NJ, US, vol. 10, no. 8, 31 December
2008 (2008-12-31), - 31 December 2008
(2008-12-31), pages 1565-1577, XP011346560,
ISSN: 1520-9210, DOI:
10.1109/TMM.2008.2007321**

EP 2 899 706 B1

# Description

The present invention relates to analysis of human behavior, involving description and identification of actions, in order to automatically recognize behavior type in an intelligent surveillance system.

There are known a number of approaches to automated behavior analysis systems.

A US patent US8131012 presents a method and a system for analyzing and learning behavior based on an acquired stream of video frames. Objects depicted in the stream are determined based on an analysis of the video frames. Each object may have a corresponding search model used to track an object's motion frame-to-frame. Classes of the objects are determined and semantic representations of the objects are generated.

A US patent application US2003/0107650 discloses a surveillance and security system for automatic detection and warning of detected events, which includes a unit for observing behavior in a predetermined area under surveillance, a unit for processing an output of observed behavior from the unit for observing, and a pattern recognition module for recognizing whether the observed behavior is associated with predefined suspicious behaviors. The pattern recognition module may include infrared heat profiles of persons, images of actual people, sequences of people manipulating shopping bags, sounds of tearing of different types of packaging. The observation of motion, which is related to behavior, is compared against a database of predefined acts.

A US patent US5666157 presents a surveillance system having at least one primary video camera for translating real images of a zone into electronic video signals at a first level of resolution. The system includes means for sampling movements of an individual or individuals located within the zone from the video signal output from at least one video camera. Video signal of sampled movements of the individual is electronically compared with known characteristics of movements which are indicative of individuals having a criminal intent.

It is the aim of the present invention to provide further improvements to analyzing human behavior in an intelligent surveillance system.

A US patent application US2011205359 presents a video surveillance system, which includes a model database storing a plurality of models and a vector database storing a plurality of vectors of recently observed trajectories. The trajectories are built for silhouettes which bound the whole observed object and therefore a single object is described by a single trajectory.

A publication "Synthesis of Silhouettes and Visual Hull Reconstruction for Articulated Humans" by Zhanfeng Yue et al (IEEE Transactions on Multimedia, vol. 10, no. 8, p. 1565-1577, XP011346560) discloses use of an algorithm that generates negative curvature minima of body contours for a surveillance system that detects suspicious behaviour.

The object of the invention is a system and a method for analyzing behavior in an intelligent surveillance system, according to the appended claims.

The presented method is particularly useful for automatic recognition of human behavior and can be used in intelligent surveillance systems, including systems having a single stationary camera.

The method and system are presented by means of example embodiments on a drawing, in which:

Fig. 1 illustrates characteristic points, a pose, a trajectory and a descriptor;
Fig. 2 illustrates an exemplary image of a person with a set of characteristic points;
Fig. 3 shows an example of an NCM point;
Fig. 4 presents a third points selection method;
Fig. 5 presents a fourth points selection method;
Fig. 6 shows an exemplary outline for defining PCM points;
Fig. 7 presents exemplary trajectories of moving objects; and
Fig. 8 presents a top level method according to the present invention.

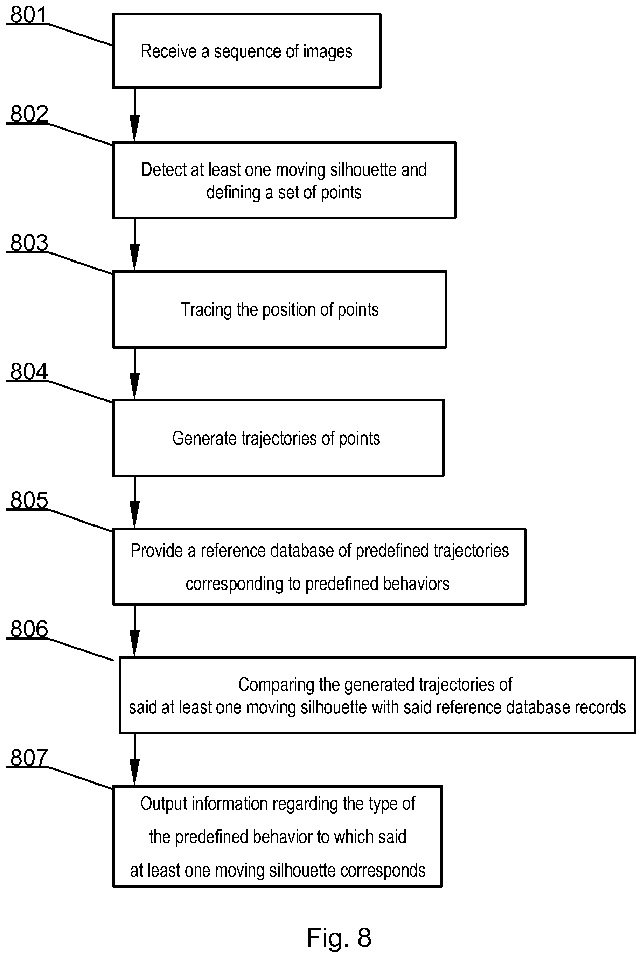

Fig. 9 presents a system according to the present invention.

## NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or similar.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or similar, refer to the action and processes of a computer system that manipulates and transforms data represented as physical (electronic) quantities within the computer's registers and memories into other data similarly represented as physical quantities within the memories or registers or other such information storage.

## DESCRIPTION OF EXAMPLE EMBODIMENTS

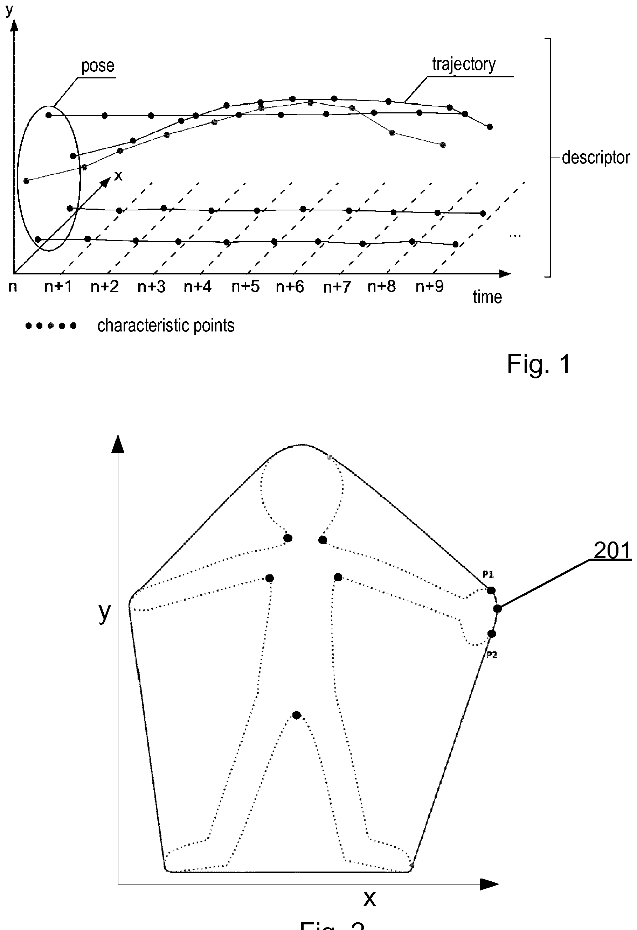

The behavior of a person can be described by a set of trajectories of characteristic points of the person, as shown in Fig. 1. A set of characteristic points at a given time defines a pose. A set of poses defined for consecutive time points or a set of time vectors for individual points forms a descriptor.

The set of points to define a pose may have a different configuration for different types of behavior to be detected. In other words, for at least one type of behavior, a set of points is generated having a configuration different than a set of points for another type of behavior. For example:

- In order to detect low complexity behaviors, such as simple arm wave gestures, the person may be characterized by three points, i.e. one point located at the head and two points located at the feet or one point located at the head and two points located at the palms,
- In order to detect medium complexity behaviors, such as calling for help, the person may be characterized by five points, i.e. one point located at the head, two points located at the feet and two points located at the palms, as shown in the example of Fig. 1,
- In order to detect high complexity behaviors, such as dancing or more complex motions, where elbows and knees make significant maneuvers, the person may be characterized by seven points, i.e. one point located at the head, two points located at the feet, two points located at the palms, and two points located at the elbows.

It shall be noted that the sets of points defined above are an example only and are non-limiting. Other pose-defining points and/or their combinations or numbers are possible without departing from the presented idea.

For consecutive frames, the positions of points belonging to the set are traced to form trajectories of points.

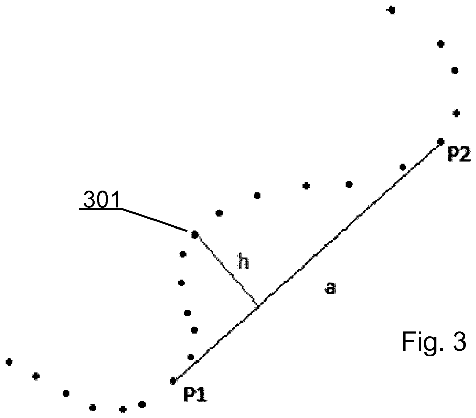

There are different ways of describing shapes in images. The present invention is based on the contours of objects in the scene, which are well characterized using the so-called concavity minima or negative curvature minima (NCM) points. These points may be used, inter alia, to recognize persons in video sequences, as described in article "Dressed Human Modeling, Detection and Parts Localization" by Zhao, L., Carnegie Mellon University Pittsburg (2001). The definition of minimum concavity is as follows: an NCM point is a point of the contour between the points (P1, P2 in Fig. 3) of a convex contour, for which the distance from the segment |P1P2| is largest. The points P1 and P2 are suitably distant from each other which will be described in details in the subsequent sections of the present description. Fig. 3 shows an example of an NCM point 301.

Like the concavity minima, contour convexity may be used to describe the curvature. The method utilizing contour convexity is called positive curvature maxima (PCM) points. This time, the extreme points P1 and P2 in Fig. 3 are selected from the convex contour so that P1 is the point closing the i-th concavity and P2 is a point opening the i+1-th concavity. Fig. 2 shows an example of a PCM point 201. Among so selected pair of points, from the contour a PCM point is selected so that the distance from the segment |P1 P2| is as high as possible.

There are possible different methods for determining the characteristic points.

The first method, according to one example embodiment of the present invention, is called "Midpoint and four extreme points". This is well suited for detecting behavior, in which human limbs are widely positioned, for example, while waving person's arms or crying for help.

The method sets four points {A, B, C, D}, wherein the Euclidean distance from the geometric center of the contour P is the greatest. These points are computed, one in each quadrant of the coordinate system having a center located at point P, by the formula:

$$A_x = \frac{p_x^i - P_x}{w}$$

$$A_y = \frac{p_y^i - P_y}{h}$$

Wherein the following references refer to:

- $A_x, A_y$ - coordinates x and y of the calculated point,
- w - contour's width on 0X axis,
- h - contour's height on 0Y axis,
- $P_x, P_y$ - coordinates x and y of the contour's central point,
- $p_x^i, p_y^i$ - coordinates x and y of the i-th contour's point.

Another example method, also utilizing the concept of the "Midpoint and four extreme points", applies a different normalization process. The method differs from the previous one in that it applies normalization of x coordinates, calculated according to the formula:

$$A_x = \frac{p_x^i - P_x}{h}$$

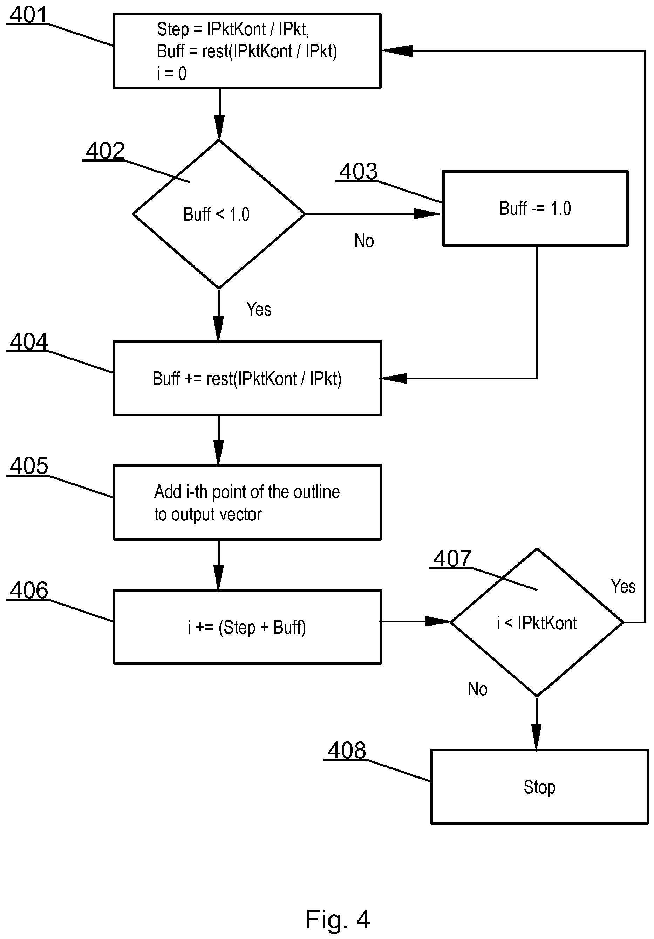

A third method is called "Points evenly spread on the contour". The method of points selection is based on selection of evenly spread, arbitrary number of points from the contour typically of a silhouette). Such approach allows for gradual selection of the level of contour mapping. The method has been depicted in Fig. 4, wherein the following references refer to:

- Step - step of selection of consecutive points;

- Buff - a buffer storing reminder of a division in order to minimize an error caused by calculations on integer numbers. It is a case when the Step is not an integer;
- rest(IPktKont/IPkt) - a function calculating a reminder of a division.

The selected contour points define a descriptor of the contour (typically of a silhouette of a person) in a given video frame and are buffered in an output vector as shown in Fig. 4.

More specifically, the procedure in Fig. 4 starts from step 401, where the Step variable is set a value of IPktKont/IPkt, wherein IPkt denotes chosen number of equally distant points on object contour and IPktKont denotes a total number of points in object contour, the Buff variable is set to rest(IPktKont / IPkt) and the 'i' variable is set to 0. Next, at step 402, it is verified whether the value of the Buff variable is less than 1. In case it is not, at step 403 the value of Buff variable is decreased by 1.0 before moving to step 404. Otherwise, at step 404, the value of the Buff variable is increased by the rest of the quotient (IPktKont/IPkt). Subsequently, at step 405, the i-th point of the contour is added to an output vector as a selected point. Next, at step 406, the variable 'i' is set to a value of Step + Buff. At step 407 it is verified whether 'i' is lower that IPktKont and in case it is the process returns to step 401 in order to process the next point or otherwise the procedure ends at step 408.

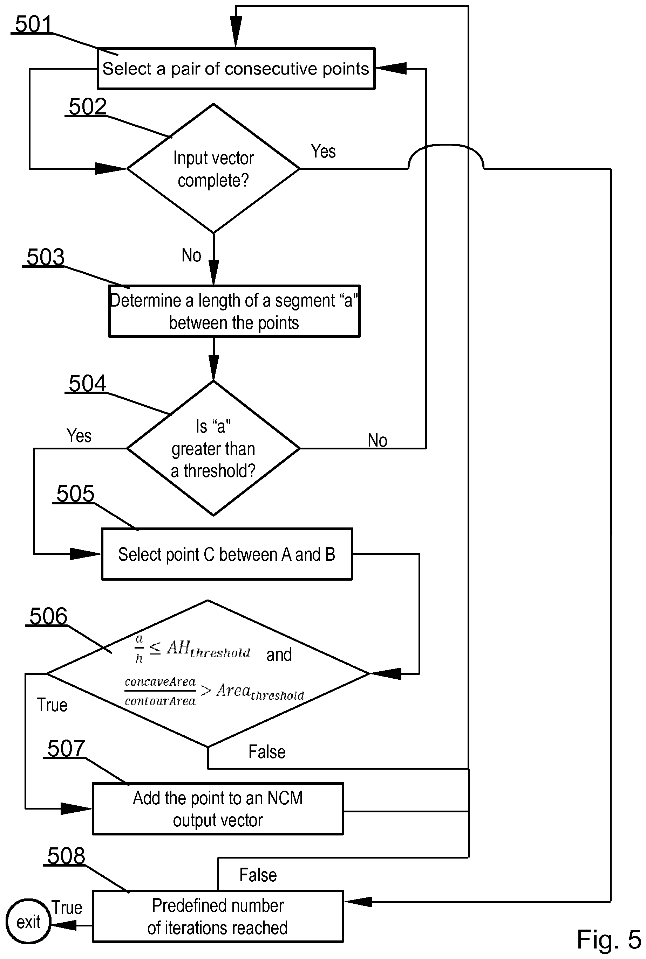

The fourth example method is based on NCM points and PCM points and has been depicted in Fig. 5. Because of such combination it is possible to describe silhouettes with data defining curvature of the contour - NCM for negative curvature minima and PCM for positive curvature maxima.

A procedure for determining NCM points starts from step 501 with selecting a pair of consecutive points {A, B} in a vector of a convex contour. If a complete vector of the convex contour has been analyzed, the procedure proceeds from step 502 to step 508. If not, then in step 503 there is determined a length of a segment "a" between the points {A, B}. Next, at step 504, it is verified whether the length "a" is greater than a threshold. In case the length "a" is greater than the threshold, the procedure proceeds to step 505. Otherwise the procedure returns to step 501 in order to select another pair of points. At step 505, there is selected a point C from the convex contour vector such that point C is between points A and B and such that its distance h from the segment "a" is the greatest.

At step 506 it is verified whether an update contour condition is fulfilled, so that point C may be added to the convex contour. The parameters of the condition are as follows: $AH_{threshold}$ is a concavity depth threshold, concaveArea is an area of concavity defined by the section of the contour between A and B points, contourArea is an inner area of the currently analyzed contour and the $Area_{threshold}$ is a threshold defining minimum ratio of concavity area to the inner area of the currently analyzed contour.

If the condition is fulfilled the procedure moves to step 507 where point C is added to the NCM output vector and the process returns to step 501.

In case, at step 508, the number of iterations has not reached a required count, the process returns to step 501 and selects another pair of points from the vector of convex contour. The process is repeated from the beginning.

The aforementioned update contour method utilizes a known algorithm, such as "Gift wrapping" or "Jarvis march". Its task is to include in the convex contour a previously selected NCM point so that its definition is maintained. During execution of this method there is added a minimum number of contour points to the contour such that the contour vector maintains its continuity.

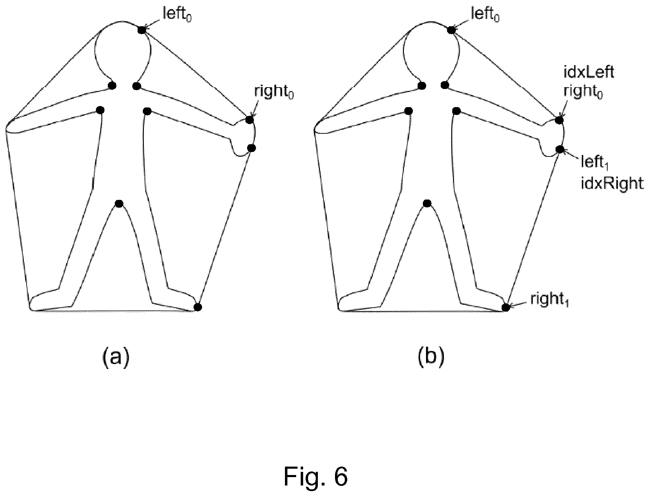

The other part of the fourth method relates to the PCM points that are determined similarly to the NCM points. The method may also be applied to pairs of points of a convex contour and is executed as follows. First there are selected pairs of points {$left_i$, $right_i$} until a pair fulfilling the condition of step 504 is obtained, thereby obtaining {$left_i$, $right_i$} pair shown in Fig.6 as element (a). There is also stored an index of a point $right_0$ in the contour vector as idxLeft.

The second step is to move the {$left_i$, $right_i$} until a next pair is found that fulfils the NCM condition thereby arriving at {$left_1$, $right_1$} shown in Fig. 6 variant (b). The index of $left_1$ in the contour vector is stored as idxRight.

The third step of the procedure is to select a point $K_0$ from the convex contour between idxLeft and idxRight, for which the distance $h_0$ from the segment $|right_0 left_1|$ is the greatest.

Lastly, as the fourth step set the idxLeft = idx(right1) and continue from the second step.

The subsequent $K_i$ points are computed in an analogous way by maximizing their corresponding distances $h_i$ from the segments $|right_i left_{i+1}|$. The process executes its last iteration when $left_n = left_0$. The vector of calculated points is added to previously determined NCM points thereby creating a pose descriptor.

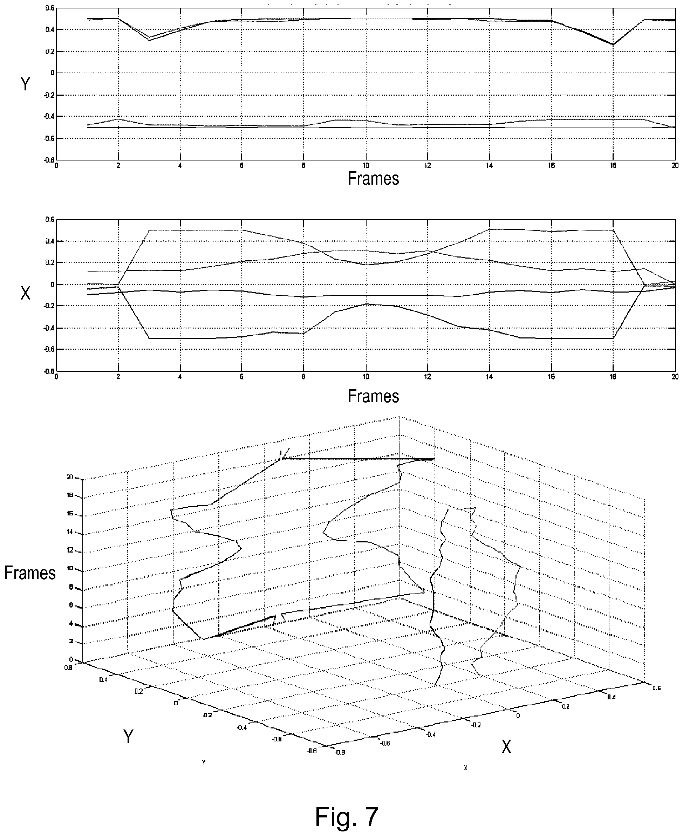

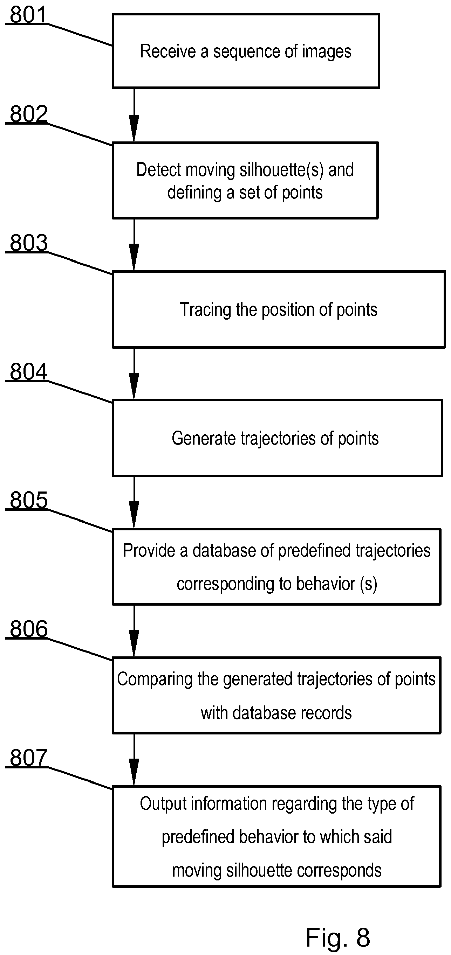

Fig. 8 presents in general the method according to the present invention. The method is utilized for analyzing behavior in an intelligent surveillance system, the system being operable to provide a series of consecutive images 801 of an area under surveillance for consecutive time points. At step 802, for each image of the series, there is generated a set of points defining at least one moving silhouette on an image. Subsequently, at step 803, position of points in the sets of points on consecutive images are traced in order to generate a plurality of trajectories of points at step 804 for said at least one moving silhouette, each trajectory corresponding to a distinct characteristic point of said silhouette. Exemplary trajectories are shown in Fig. 7, wherein the first chart from the top presents positions of points on consecutive frames in Y axis and the second chart presents positions of points on consecutive frames in X axis. The bottom chart represents trajectories on both axes, wherein the horizontal axes represent position of points on X, Y axis and the vertical axis represents consecutive frames. Each line corresponds to a trajectory of a different point. Next, at step 805, there is provided a reference database of predefined trajectories corresponding to the predefined behaviors, so that at step 806 the generated trajectories of points for said at least one moving silhouette can be compared with reference database records. The comparison is performed by analyzing the trajectory related to a certain number of previous frames, wherein the number of frames depends on the reference trajectory for a particular type of activity, with which the observer trajectory is compared.

The comparison is performed by calculating the Euclidean distance for pairs of corresponding points. Each trajectory shall fit within a predetermined range. For example, assuming that 4 points of a person are traced (e.g. two

It can be easily recognized, by one skilled in the art, that the aforementioned method for analyzing human behavior in an intelligent surveillance system may be performed and/or controlled by one or more computer programs. Such computer programs are typically executed by utilizing the computing resources in a computing device such as personal computers, personal digital assistants, cellular telephones, receivers and decoders of digital television or similar. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for analyzing behavior in an intelligent surveillance system, the system being operable to provide a series of consecutive images of an area under surveillance for consecutive time points (801), the method comprising the steps of:

   - for each image of the series, generating a set of points defining at least one moving silhouette (802) on an image;
   - tracing the position of points in the sets of points (803) on consecutive images in order to generate a trajectory (804);

   **characterized by**:

   - generating a plurality of trajectories of points for said at least one moving silhouette, each trajectory corresponding to a distinct characteristic point of said silhouette (804),
   - providing a reference database of predefined trajectories corresponding to predefined behaviors (805);
   - comparing said generated plurality of trajectories of said at least one moving silhouette with said reference database (806);
   - outputting (807) information regarding the type of the predefined behavior to which said at least one moving silhouette corresponds.

2. The method according to claim 1, wherein to detect at least one type of behavior, a set of points is generated having a configuration different than a set of points for another type of behavior.

3. The method according to claim 1, wherein said step of generating a set of points defining at least one moving silhouette (802) on an image comprises generating negative curvature minima.

4. The method according to claim 1, wherein said step of generating a set of points defining at least one moving silhouette (802) on an image comprises generating positive curvature maxima.

5. The method according to claim 1, wherein said step of generating a set of points defining at least one moving silhouette (802) on an image comprises generating negative curvature minima and positive curvature maxima.

6. A computer program comprising program code means for performing all the steps of the computer-implemented method according to any of claims 1 to 5 when said program is run on a computer.

7. A computer readable medium storing computer-executable instructions performing all the steps of the computer-implemented method according to any of claims 1 to 5 when executed on a computer.

**8.** A system for analyzing behavior in an intelligent surveillance system, the system comprising an image sequence input module (902) configured to provide a series of consecutive images of an area under surveillance for consecutive time points (801), the system further comprising:

- a silhouette detector (905) configured to generate, for each image of the series, a set of points defining at least one moving silhouette (802) on an image;
- a trajectories generator (907) configured to trace the position of points in the sets of points (803) on consecutive images in order to generate a trajectory (804);

**characterized in that**:

- the trajectories generator (907) is configured to generate (804) a plurality of trajectories of points for said at least one moving silhouette, each trajectory corresponding to a distinct characteristic point of said silhouette;
- the system further comprises a reference database (903) configured to store (805) predefined trajectories corresponding to predefined behaviors;
- a comparator and behavior detector (908) configured to compare (806) said generated plurality of trajectories of said at least one moving silhouette with said reference database (903);
- an output module configured to output (807) information regarding the type of the predefined behavior to which said at least one moving silhouette corresponds.

**Patentansprüche**

**1.** Verfahren zur Analyse des Verhaltens in einem intelligenten Überwachungssystem, wobei das System betrieben werden kann, um eine Reihe aufeinanderfolgender Bilder eines überwachten Bereichs für aufeinanderfolgende Zeitpunkte (801) bereitzustellen, wobei das Verfahren die folgenden Schritte umfasst:

- für jedes Bild der Reihe, Generieren eines Satzes von Punkten, die mindestens eine sich bewegende Silhouette (802) auf einem Bild definieren;
- Nachverfolgen der Position von Punkten in den Sätzen von Punkten (803) auf aufeinanderfolgenden Bildern, um eine Trajektorie (804) zu generieren;

**gekennzeichnet durch**:

- Generieren einer Vielzahl von Trajektorien von Punkten für die mindestens eine sich bewegende Silhouette, wobei jede Trajektorie einem anderen charakteristischen Punkt der Silhouette (804) entspricht,
- Bereitstellen einer Referenzdatenbank von vordefinierten Trajektorien, die vordefinierten Verhaltensweisen (805) entsprechen;
- Vergleichen der generierten Vielzahl von Trajektorien der mindestens einen sich bewegenden Silhouette mit der Referenzdatenbank (806);
- Ausgeben (807) von Informationen im Hinblick auf die Art der vordefinierten Verhaltensweise, der mindestens eine sich bewegende Silhouette entspricht.

**2.** Verfahren nach Anspruch 1, wobei, um mindestens eine Art einer Verhaltensweise zu detektieren, ein Satz von Punkten generiert wird, der eine Konfiguration aufweist, die sich von einem Satz von Punkten für eine andere Art einer Verhaltensweise unterscheidet.

**3.** Verfahren nach Anspruch 1, wobei der Schritt des Generierens eines Satzes von Punkten, die mindestens eine sich bewegende Silhouette (802) auf einem Bild definieren, das Generieren von Minima einer negativen Krümmung umfasst.

**4.** Verfahren nach Anspruch 1, wobei der Schritt des Generierens eines Satzes von Punkten, die mindestens eine sich bewegende Silhouette (802) auf einem Bild definieren, das Generieren von Maxima einer positiven Krümmung umfasst.

**5.** Verfahren nach Anspruch 1, wobei der Schritt des Generierens eines Satzes von Punkten, die mindestens eine sich bewegende Silhouette (802) auf einem Bild definieren, das Generieren von Minima einer negativen Krümmung und von Maxima einer positiven Krümmung umfasst.

**6.** Computerprogramm, umfassend Programmcodemittel zum Ausführen aller Schritte des computerimplementierten Verfahrens nach einem der Ansprüche 1 bis 5, wenn das Programm auf einem Computer ausgeführt wird.

**7.** Computerlesbares Medium, das computerausführbare Anweisungen speichert, die alle Schritte des computerimplementierten Verfahrens gemäß einem der Ansprüche 1 bis 5 ausführen, wenn sie auf einem Computer ausgeführt werden.

**8.** System zur Analyse des Verhaltens in einem intelligenten Überwachungssystem, wobei das System ein Bildsequenzeingabemodul (902) umfasst, das konfiguriert ist, um eine Reihe aufeinanderfolgender Bilder eines überwachten Bereichs für aufeinanderfolgende Zeitpunkte (801) bereitzustellen, wobei das System ferner Folgendes umfasst:

- einen Silhouettendetektor (905), der konfiguriert ist, um für jedes Bild der Reihe einen Satz von Punkten zu generieren, die mindestens eine sich bewegende Silhouette (802) auf einem Bild definieren;
- einen Trajektoriengenerator (907), der konfiguriert ist, um die Position von Punkten in den Sätzen von Punkten (803) auf aufeinanderfolgenden Bildern nachzuverfolgen, um eine Trajektorie (804) zu generieren;

**dadurch gekennzeichnet, dass**:

- der Trajektoriengenerator (907) konfiguriert ist, um eine Vielzahl von Trajektorien von Punkten für die mindestens eine sich bewegende Silhouette zu generieren (804), wobei jede Trajektorie einem anderen charakteristischen Punkt der Silhouette entspricht;
- das System ferner eine Referenzdatenbank (903) umfasst, die konfiguriert ist, um vordefinierte Trajektorien zu speichern (805), die vordefinierten Verhaltensweisen entsprechen;
- ein Komparator und Verhaltensdetektor (908), konfiguriert ist, um die generierte Vielzahl von Trajektorien der mindestens einen sich bewegenden Silhouette mit der Referenzdatenbank (903) zu vergleichen (806);
- ein Ausgabemodul, konfiguriert ist, um Informationen im Hinblick auf die Art der vordefinierten Verhaltensweise, der mindestens eine sich bewegende Silhouette entspricht, auszugeben (807).

**Revendications**

1. Procédé pour analyser le comportement dans un système de surveillance intelligent, le système pouvant fonctionner de façon à fournir une série d'images consécutives d'une zone sous surveillance pour des points de temps consécutifs (801), le procédé comprenant les étapes consistant à :

- pour chaque image de la série, générer un ensemble de points définissant au moins une silhouette en mouvement (802) sur une image ;
- tracer la position des points dans les ensembles de points (803) sur des images consécutives afin de générer une trajectoire (804) ;

**caractérisé par** :

- la génération d'une pluralité de trajectoires de points de ladite au moins une silhouette en mouvement, chaque trajectoire correspondant à un point caractéristique distinct de ladite silhouette (804),
- la fourniture d'une base de données de référence de trajectoires prédéfinies correspondant à des comportements prédéfinis (805) ;
- la comparaison de ladite pluralité générée de trajectoires de ladite au moins une silhouette en mouvement avec ladite base de données de référence (806) ;
- la sortie (807) des informations concernant le type de comportement prédéfini auquel ladite au moins une silhouette en mouvement correspond.

2. Procédé selon la revendication 1, où pour la détection d'au moins un type de comportement, un ensemble de points est généré présentant une configuration différente de celle d'un ensemble de points pour un autre type de comportement.

3. Procédé selon la revendication 1, où ladite étape consistant à générer un ensemble de points définissant au moins une silhouette en mouvement (802) sur une image comprend la génération de minima de courbure négative.

4. Procédé selon la revendication 1, où ladite étape consistant à générer un ensemble de points définissant au moins une silhouette en mouvement (802) sur une image comprend la génération de minima de courbure positive.

5. Procédé selon la revendication 1, où ladite étape consistant à générer un ensemble de points définissant au moins une silhouette en mouvement (802) sur une image comprend la génération de minima de courbure positive et minima de courbure négative.

6. Programme informatique comprenant un moyen de codage informatique adapté pour exécuter toutes les étapes du procédé mis en oeuvre par ordinateur selon l'une quelconque des revendications 1 à 5, lorsque ledit programme est exécuté sur un ordinateur.

7. Support lisible par ordinateur stockant des instructions exécutables par ordinateur réalisant toutes les étapes du procédé mis en oeuvre par ordinateur selon l'une quelconque des revendications 1 à 5, lorsqu'il est exécuté sur un ordinateur.

8. Système pour analyser le comportement dans un système de surveillance intelligent, le système comprenant un module de saisie de séquences d'images (902) configuré pour fournir une série d'images consécutives d'une zone sous surveillance pour des points de temps consécutifs (801), le système comprenant en outre :

- un détecteur de silhouette (905) configuré pour générer, pour chaque image de la série, un ensemble de points définissant au moins une silhouette en mouvement (802) sur une image ;
- un générateur de trajectoire (907) configuré pour tracer la position des points dans les ensembles de points (803) sur des images consécutives afin de générer une trajectoire (804) ;

**caractérisé en ce que** :

- le générateur de trajectoire (907) configuré pour générer (804) une pluralité de trajectoires de points pour ladite au moins une silhouette en mouvement, chaque trajectoire correspondant à un point caractéristique distinct de ladite silhouette ;
- le système comprend en outre une base de données de référence (903) configurée pour stocker (805) des trajectoires prédéfinies correspondant à des comportements prédéfinis ;
- un comparateur et un détecteur de comportement (908) configurés pour comparer (806) ladite pluralité générée de trajectoires de ladite au moins une silhouette en mouvement avec ladite base de données de référence (903) ;
- un module de sortie configuré pour produire (807) des informations concernant le type de comportement prédéfini auquel ladite au moins une silhouette en mouvement correspond.

Fig. 1

Fig. 2

301

h

a

P2

P1

Fig. 3

Fig. 4

501

Select a pair of consecutive points

502

Input vector complete?

Yes

No

503

Determine a length of a segment "a" between the points

504

Is "a" greater than a threshold?

Yes

No

505

Select point C between A and B

506

$\frac{a}{h} \leq AH_{threshold}$ and

$\frac{concaveArea}{contourArea} > Area_{threshold}$

True

False

507

Add the point to an NCM output vector

508

False

True

exit

Predefined number of iterations reached

Fig. 5

Fig. 6

Fig. 7

801
┌─────────────────────────────┐
│   Receive a sequence of images │
└─────────────────────────────┘

802
┌─────────────────────────────┐
│   Detect moving silhouette(s) and │
│   defining a set of points        │
└─────────────────────────────┘

803
┌─────────────────────────────┐
│   Tracing the position of points │
└─────────────────────────────┘

804
┌─────────────────────────────┐
│   Generate trajectories of points │
└─────────────────────────────┘

805
┌─────────────────────────────┐
│   Provide a database of predefined trajectories │
│   corresponding to behavior (s)                 │
└─────────────────────────────┘

806
┌─────────────────────────────┐
│   Comparing the generated trajectories of points │
│   with database records                          │
└─────────────────────────────┘

807
┌─────────────────────────────┐
│   Output information regarding the type of │
│   predefined behavior to which said        │
│   moving silhouette corresponds            │
└─────────────────────────────┘

Fig. 8

801

Receive a sequence of images

802

Detect at least one moving silhouette and defining a set of points

803

Tracing the position of points

804

Generate trajectories of points

805

Provide a reference database of predefined trajectories corresponding to predefined behaviors

806

Comparing the generated trajectories of said at least one moving silhouette with said reference database records

807

Output information regarding the type of the predefined behavior to which said at least one moving silhouette corresponds

Fig. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8131012 B
- US 20030107650 A
- US 5666157 A
- US 2011205359 A

**Non-patent literature cited in the description**

- **ZHANFENG YUE et al.** Synthesis of Silhouettes and Visual Hull Reconstruction for Articulated Humans. *IEEE Transactions on Multimedia,* vol. 10 (8), 1565-1577
- **ZHAO, L.** Dressed Human Modeling, Detection and Parts Localization. Carnegie Mellon University Pittsburg, 2001